# EUROPÄISCHE PATENTSCHRIFT

(11) **EP 3 633 110 B1**
(45) Veröffentlichungstag und Bekanntmachung des Hinweises auf die Patenterteilung: **16.03.2022**
(21) Anmeldenummer: 19199715.4
(22) Anmeldetag: 26.09.2019
(51) Int. Cl.: E02F 3/40, A01F 25/20, E02F 3/42, E02F 3/43, E02F 9/26

(54) **VERFAHREN ZUR STEUERUNG EINES LADEWERKZEUGS**
METHOD FOR CONTROLLING A CHARGING TOOL
PROCÉDÉ DE COMMANDE D'UN OUTIL DE CHARGEMENT

(30) Priorität: 04.10.2018 DE 102018217029
(43) Veröffentlichungstag der Anmeldung: 08.04.2020
(73) Patentinhaber: Deere & Company, Moline, IL 61265 (US)
(72) Erfinder: Remmelmann Dr., Andreas, 68163 Mannheim (DE)
(74) Vertreter: Dehnhardt, Florian Christopher

(56) Entgegenhaltungen:
- EP-A1- 2 838 355
- EP-A2- 1 452 087
- NL-C2- 2 001 458
- US-A1- 2015 104 273
- US-A1- 2016 198 677

## Beschreibung

Die Erfindung betrifft ein Verfahren zur Steuerung eines Ladewerkzeugs mit den Merkmalen des Oberbegriffs des Anspruches 1. Ein derartiges Verfahren geht aus der NL 2 001 458 C2 hervor, wobei eine Vorabberechnung von Positionsdaten erfolgt, entsprechend derer ein Ladewerkzeug zum Zwecke der Aufnahme einer gewünschten Menge an Ladegut positioniert wird.

In der US 2016/198677 A1 und der EP 2 838 355 A1 sind Verfahren offenbart, bei denen eine Gewichtsermittlung des bereits aufgenommenen Ladeguts im Nachhinein vorgesehen ist.

Aus der US 9 938 692 B2 ist ferner ein Verfahren bekannt, bei dem Bewegungen eines Hubzylinders und eines Hubarmes einer Hubvorrichtung gesteuert werden, um ein daran angeordnetes und mit einer Nutzlast gefülltes Ladewerkzeug in Form einer Ladeschaufel zu heben und zu transportieren. Dabei wird das Gewicht der transportierten Nutzlast in Abhängigkeit von Druckwerten des Hubzylinders, einem Hubarmwinkel und anderen kinematischen Eigenschaften ermittelt. EP1452087A2 beschreibt ein Verfahren gemäß dem Oberbegriff des Anspruchs 1 bzw. ein System gemäß dem Oberbegriff des Anspruchs 7.

Aufgabe der vorliegenden Erfindung ist es, während des Arbeitsbetriebs des Ladewerkzeugs die Masse der Nutzlast verfahrenstechnisch einfach zu ermitteln.

Diese Aufgabe wird durch ein Verfahren mit den Merkmalen des Patentanspruchs 1 gelöst.

Weitere vorteilhafte Ausgestaltungen des erfindungsgemäßen Verfahrens gehen aus den Unteransprüchen hervor.

Gemäß Anspruch 1 wird ein Ladewerkzeug, insbesondere dessen Bewegungen während seines Arbeitsbetriebs, gesteuert. Das als Beißschaufel mit einer Schaufelaufnahme und einer damit zusammenwirkenden schwenkbaren Schaufelklappe ausgebildete Ladewerkzeug ist an einer beweglichen Hubvorrichtung zum Heben und Senken des Ladewerkzeugs angeordnet, während die Hubvorrichtung selbst an einer Arbeitsmaschine montiert ist. Während seines Arbeitsbetriebs nimmt das Ladewerkzeug eine Nutzlast von einem Nutzlaststock auf. Insbesondere wird die Nutzlast an eine andere Stelle transportiert und dort wieder abgeladen. Um den Arbeitsbetrieb des Ladewerkzeugs und der Arbeitsmaschine zu unterstützen, wird eine Masse der Nutzlast ermittelt. Diese Ermittlung der Masse der Nutzlast kann vor oder nach ihrer Aufnahme durch das Ladewerkzeug erfolgen.

Für die Ermittlung der Masse der Nutzlast werden Kalibrierdaten bereitgestellt, welche ein Verhältnis von einem Volumen der Nutzlast zu einer Masse der Nutzlast repräsentieren. Während des Arbeitsbetriebs des Ladewerkzeugs wird ein Volumen der Nutzlast vor ihrer Aufnahme durch das Ladewerkzeug erfasst. Die Masse dieser Nutzlast wird dann verfahrenstechnisch einfach auf Basis der Kalibrierdaten und des bereits erfassten Volumens ermittelt.

Zum Aufnehmen der Nutzlast mit der ermittelten Masse durch das Ladewerkzeug wird die Schaufelaufnahme an den Nutzlaststock herangeführt. Hierbei wird ein Schwenken der Schaufelklappe in einer Schließrichtung ausgelöst und die ermittelte Masse tatsächlich aufgenommen, sobald aufgrund eines Vergleichs die aufnehmbare Masse als mit der vorgegebenen Ziel-Masse übereinstimmend detektiert wird. Die Beißschaufel fällt beim Ladevorgang (automatisch oder vom Nutzer ausgelöst) herunter und trennt die gewünschte Masse der Nutzlast von dem Futter- bzw. Silagestock ab.

Die ermittelte Masse kann als Information mit weiteren Funktionalitäten bekannter Wiegesysteme für Ladewerkzeuge kombiniert werden.

Die ermittelte Masse kann als Information für eine Steuerung des Arbeitsbetriebs von einer elektronischen Steuereinheit verarbeitet werden, so dass dem Führer der Arbeitsmaschine eine ihn entlastende Assistenzfunktion zur Verfügung gestellt werden kann. Beispielsweise kann der Nutzer bzw. Führer der Arbeitsmaschine dann auf eine mitunter fehlerbehaftete Abschätzung der Masse der betrachteten Nutzlast verzichten. Dies betrifft insbesondere den Fall der beabsichtigten Aufnahme einer Nutzlast durch das Ladewerkzeug und auch den Fall eines beabsichtigten Abladens bzw. Auskippens einer vom Ladewerkzeug transportierten Nutzlast an einer Abladestelle.

Die Kalibrierdaten können z.B. als Diagramm oder Kennlinie bereitgestellt werden. Die Kalibrierdaten können in einem Kalibriervorgang vor dem Arbeitsbetrieb des Ladewerkzeugs generiert werden und beispielsweise in einer Speichereinheit oder einer Steuereinheit zur Steuerung des Verfahrens abgelegt werden. Somit kann während des Arbeitsbetriebs jederzeit auf die für die jeweilige Nutzlast spezifischen Kalibrierdaten zugegriffen werden.

Die Kalibrierdaten beinhalten insbesondere eine spezifische Dichte der jeweiligen Nutzlast. Daraus lassen sich bei ermittelten Volumina die entsprechenden Massen verfahrenstechnisch einfach ableiten. Vorzugsweise werden für einen Nutzlaststock höhenabhängig unterschiedliche Dichtewerte als Kalibrierdaten bereitgestellt, wenn das Material des Nutzlaststockes von seinem Bodenniveau ausgehend entlang der Höhenrichtung einen Dichtegradienten aufweist. Dieser Dichtegradient oder auch andere Merkmale des Nutzlaststockes lassen sich beispielsweise mittels einer senkrechten Anschnittfläche des Nutzlaststockes ableiten.

Die Arbeitsmaschine ist insbesondere als ein Nutzfahrzeug, z.B. landwirtschaftliches Fahrzeug, ausgebildet. Als Nutzfahrzeuge kommen vorzugsweise Schlepper, Traktoren, Baumaschinen, Radlader, Bagger, Schaufelbagger in Frage. Abhängig vom Typ oder der Funktionalität der jeweiligen Arbeitsmaschine kann die Hubvorrichtung zwischen der Arbeitsmaschine und dem Ladewerkzeug ein einziges, in sich starres Auslegerteil aufweisen oder alternativ mehrere, miteinander beweglich verbundene Auslegerteile aufweisen.

Die Nutzlast kann ein beliebiges Schüttgut sein und unterschiedliche Aggregatzustände aufweisen. Beispielsweise handelt es sich bei der Nutzlast um eine Flüssigkeit, Saatgut, Erntegut, Tierfutter, Erdreich, Sand, oder Steingemisch wie Schotter, Kies und dergleichen.

Die Erfassung des Volumens der Nutzlast erfolgt mittels geeigneter, vorzugsweise optischer, Sensormittel. Beispielsweise ist an dem Ladewerkzeug mindestens eine Kamera oder mindestens ein Abstandssensor angeordnet. Die Sensormittel können auch alternativ oder zusätzlich an der Hubvorrichtung und/oder einer Tragstruktur der Arbeitsmaschine angeordnet sein.

Vorzugsweise wird das Volumen einer Nutzlast bereits vor ihrer Aufnahme durch das Ladewerkzeug erfasst. Hierdurch kann bereits vor einer Aufnahme der Nutzlast an einem Nutzlaststock (z.B. einem Silagestock) oder einer anderen Lagerstätte dieser Nutzlast genau abgeschätzt werden, welche Masse das Ladewerkzeug bei dem aktuellen Ladevorgang aufnehmen würde. Diese Information unterstützt einen effizienten und wirtschaftlichen Arbeitsbetrieb, da sie eine Steuerung des Ladewerkzeugs derart beeinflussen kann, dass während eines einzelnen Ladevorganges weder eine zu geringe noch eine zu große Masse von dem Ladewerkzeug aufgenommen wird. Somit bietet das Verfahren eine vorteilhafte Assistenzfunktion bei Ladearbeiten der Arbeitsmaschine. Der Führer der Arbeitsmaschine kann während des Arbeitsbetriebs erheblich entlastet werden.

Eine automatische Steuerung des Arbeitsbetriebs des Ladewerkzeugs und der Arbeitsmaschine und folglich auch ein effizienter Arbeitsablauf der Ladearbeiten werden vorteilhaft unterstützt, wenn die ermittelte Masse mit einer vorbestimmten Ziel-Masse (z.B. von 20 kg bis 700 kg) verglichen wird. In Abhängigkeit des Vergleichsergebnisses können dann entsprechende Steuersignale generiert werden, um eine Arbeitsfunktion der Arbeitsmaschine automatisch zu steuern. Die Ziel-Masse für die aktuell betrachtete Nutzlast kann in einer Steuereinheit der Arbeitsmaschine hinterlegt sein.

Bei einer bevorzugten Ausführungsform wird als eine Arbeitsfunktion der Arbeitsmaschine der Betrieb des Ladewerkzeuges gesteuert. Vorteilhaft wird das Ladewerkzeug derart gesteuert, dass es in Abhängigkeit des vorgenannten Vergleichsergebnisses eine Nutzlast automatisch aufnimmt oder für eine vom Nutzer auszulösende Aufnahme der Nutzlast freigegeben wird (z.B. mittels einer geeigneten Signalisierung an den Nutzer bzw. Fahrer). Hierdurch wird verfahrenstechnisch einfach erreicht, dass das Ladewerkzeug - ggf. unter Berücksichtigung einer definierten Toleranzmasse - bei einem einzelnen Ladevorgang immer nur die gewünschte Ziel-Masse aufnimmt. Mit anderen Worten wird ein Ladevorgang bei Detektierung einer gewünschten Masse der Nutzlast automatisch gestartet oder der Ladevorgang kann vom Nutzer erst bei Detektierung einer gewünschten Masse der Nutzlast gestartet werden. Der Nutzer bzw. Fahrer der Arbeitsmaschine wird hierdurch zusätzlich entlastet.

Diese Steuerung des Ladewerkzeugs verhindert verfahrenstechnisch einfach, dass das Ladewerkzeug unerwünscht eine zu kleine oder zu große Menge einer Nutzlast bei einem einzelnen Ladevorgang aufnimmt. Vorteilhaft lässt sich diese Steuerung beispielsweise bei einem Futter- bzw. Silagestock anwenden, um dort bei einem einzelnen Ladevorgang mit dem Ladewerkzeug möglichst genau die benötigte Menge an Tierfutter als Nutzlast zu entnehmen und einem anderen Ort (z.B. Mischwagen oder Mischbehälter für Tierfutter) zuzuführen. Hierdurch wird vermieden, dass überschüssiges Tierfutter wieder in den Futter- bzw. Silagestock zurückgekippt wird und einem für die Futterqualität nachteiligen Oxidationsprozess ausgesetzt ist.

Vorzugsweise wird in Abhängigkeit des vorgenannten Vergleichsergebnisses ein Fahrantrieb (z.B. Verbrennungsmotor mit Antriebsstrang; Elektromotor) gestoppt oder unterbrochen. Hierdurch wird dem Führer der Arbeitsmaschine eine weitere Assistenzfunktion geboten, indem er beispielsweise automatisch daran gehindert wird, noch weiter in einen Nutzlaststock (z.B. Tierfutter) hineinzufahren und hierdurch bei dem aktuellen Ladevorgang eine zu große Masse der Nutzlast aufzunehmen. Weiterhin kann diese automatische Steuerung mit einer Funktion kombiniert werden, wonach ein Ladevorgang des Ladewerkzeugs erst nach dem gestoppten bzw. unterbrochenen Fahrantrieb (automatisch oder individuell durch den Nutzer) gestartet werden kann.

Während des Arbeitsbetriebs kann das Ladewerkzeug den jeweiligen Ladevorgang in unterschiedlichen Höhenpositionen durchführen. Die Höhenposition hängt dabei insbesondere von dem aktuellen Aufbau des Nutzlaststockes oder der noch vorhandenen Restmenge des Nutzlaststockes ab. Die Höhenposition kann sich beispielsweise relativ zu einer Ebene des Erdbodens oder zu einem Bodenniveau des Nutzlaststockes beziehen. Wegen eines oftmals vorhandenen Dichtegradienten des Nutzlaststockes ist es vorteilhaft, für mehrere, also unterschiedliche Höhenpositionen jeweils Kalibrierdaten zu generieren und bereitzustellen. In Abhängigkeit von einer detektierten Höhenposition des Ladewerkzeugs können dann automatisch die dieser Höhenposition zugeordneten Kalibrierdaten bereitgestellt werden. Die Ermittlung der Masse der betrachtete Nutzlast wird hierdurch noch genauer.

Kalibrierdaten für unterschiedliche Höhenpositionen des Ladewerkzeugs werden während eines Kalibriervorganges beispielsweise für einen Bodenbereich des Nutzlaststockes und für einen höhenmäßig gegenüberliegenden Spitzenbereich des Nutzlaststockes generiert. Daraus lassen sich technisch einfach mittels Interpolation Kalibrierdaten für eine Vielzahl dazwischen liegender Höhenpositionen generieren, so dass mit geringem Kalibrieraufwand ein ganzes Kennfeld als Kalibrierdaten für diesen Nutzlaststock generiert und bereitgestellt werden kann.

Die jeweilige Höhenposition des Ladewerkzeugs wird mittels geeigneter Sensormittel detektiert. Eine geeignete Positionssensorik ist vorzugsweise an der Hubvorrichtung und/oder dem Ladewerkzeug und/oder der Arbeitsmaschine selbst angeordnet.

Vorzugsweise wird das Ladewerkzeug während seines Arbeitsbetriebs nacheinander an unterschiedliche Nutzlaststöcke zur Aufnahme unterschiedlicher Nutzlasten herangeführt. Die Nutzlaststöcke können hinsichtlich ihrer spezifischen Dichte und/oder Materialien und/oder anderer Merkmale unterschiedlich sein. Dabei kann mittels des Ladewerkzeugs an jedem Nutzlaststock mindestens ein Ladevorgang durchgeführt werden. Dieser sequenzartige Arbeitsbetrieb kann vorteilhaft dazu genutzt werden, um auf ökonomische Weise eine vorgegebene Mischung aus unterschiedlichen Nutzlasten zu realisieren. Insbesondere kann dabei eine exakte Dosierung einer Futtermischung als Tierfutter erzielt werden.

In einer weiteren bevorzugten Ausführungsform wird das Ladewerkzeug in einer vorbestimmten Reihenfolge an unterschiedliche Nutzlaststöcke herangeführt. Durch die vorbestimmte Reihenfolge kann die Qualität der Mischung verbessert werden, da das Ergebnis des Mischvorgangs (z.B. in einem Mischwagen oder Mischbehälter) durch die Relativanordnung der unterschiedlichen Nutzlasten zueinander beeinflusst wird. Beispielsweise ist es im Falle einer Futtermischung vorteilhaft, an die Arbeitsstelle zur Herstellung der Mischung Bestandteile mit geringer Dichte abzuladen, bevor Bestandteile mit größerer Dichte abgeladen werden.

Sofern die Arbeitsmaschine über ein Fahrzeug-Positionserfassungssystem (z.B. GPS) verfügt, kann dieses die Herstellung einer vorgegebenen Nutzlast-Mischung unterstützen. Beispielsweise kann eine Steuereinheit die vorgegebenen Mischungs-Daten verarbeiten und in Abhängigkeit davon die Arbeitsmaschine autonom nacheinander in den richtigen Nutzlaststock manövrieren. Alternativ kann die Steuereinheit Warnsignale an den Fahrer generieren, falls er die Arbeitsmaschine nicht zu dem richtigen Nutzlaststock fährt und/oder die Nutzlaststöcke nicht in der richtigen Reihenfolge anfährt.

Zur Durchführung des Verfahrens ist vorzugsweise ein System mit geeigneten Steuermitteln vorgesehen. Diese Steuermittel umfassen insbesondere eine Steuereinheit, welche unterschiedliche Signale verarbeitet und in Abhängigkeit von der Signalverarbeitung Arbeitsfunktionen der Arbeitsmaschine steuert. Diese Steuerung kann beispielsweise die Bewegungssteuerung des Ladewerkzeugs und/oder der Hubvorrichtung während oder außerhalb eines Ladevorganges betreffen. Auch die Arbeitsmaschine selbst, insbesondere deren Fahrantrieb, kann durch diese Steuereinheit gesteuert werden, um die Durchführung des Verfahrens zu unterstützen. Die Steuermittel bzw. die Steuereinheit verarbeiten insbesondere Signale von mindestens einer der folgenden Signalquellen:
Die oben genannten Sensormittel, Positionssensorik, Steuersignale oder Dateneingaben durch den Nutzer bzw. Fahrer, Kalibrierdaten, Fahrzeug-Positionserfassungssystem, Daten- und/oder Steuerbus der Arbeitsmaschine.

Das erfindungsgemäße Verfahren wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine schematische Seitenansicht einer Arbeitsmaschine mit einem Ladewerkzeug für den Arbeitsbetrieb an mindestens einem Nutzlaststock, und
- Fig. 2: ein Blockschaltbild mit Steuermitteln zur Durchführung des erfindungsgemäßen Verfahrens.

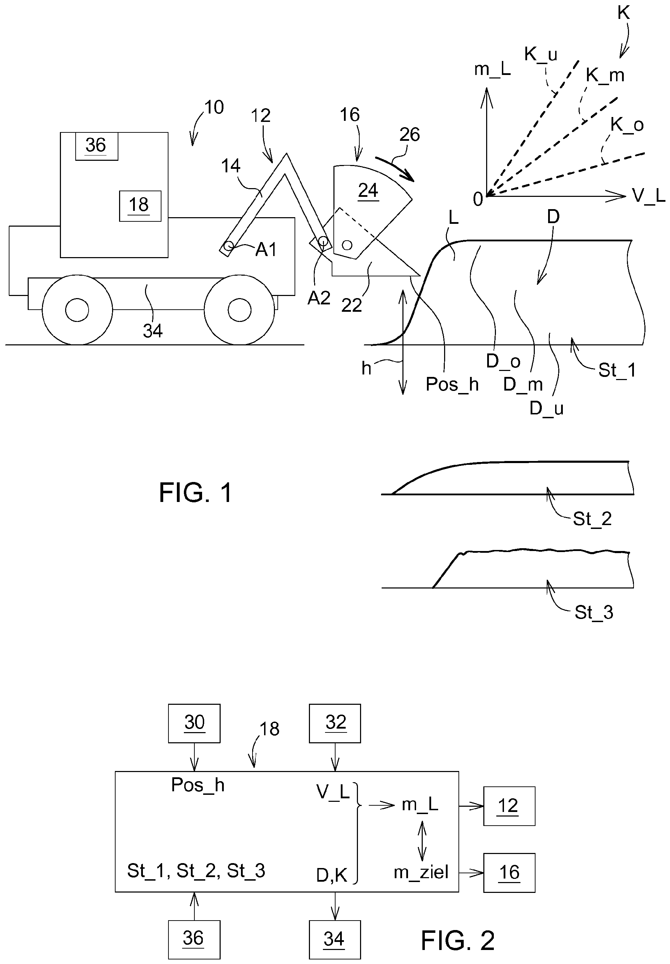

Fig. 1 zeigt schematisch eine Arbeitsmaschine 10 mit einer daran angeordneten Hubvorrichtung 12 in Form eines Frontladers. Die Hubvorrichtung 12 ist an der Arbeitsmaschine 10 gelenkig gelagert. Sie weist einen Ausleger 14 auf, der um eine erste Schwenkachse A1 relativ zur Arbeitsmaschine 10 schwenkbar gelagert ist. Ein Ladewerkzeug 16 ist um eine zweite Schwenkachse A2 relativ zum Ausleger 14 schwenkbar gelagert.

Mittels einer in der Arbeitsmaschine 10 integrierten elektronischen Steuereinheit 18, entsprechender Steuersignale aufgrund eines automatischen Algorithmus und/oder individueller Signaleingaben durch einen Nutzer bzw. Führer der Arbeitsmaschine kann die Hubvorrichtung 12, insbesondere deren Ausleger 14 und das Ladewerkzeug 16, bewegungsmäßig angesteuert werden. Zu diesem Zweck ist die Hubvorrichtung 12 mit geeigneten Aktuatoren (z.B. hydraulische Hubzylinder) gekoppelt.

Das Ladewerkzeug 16 ist als eine sogenannte Beißschaufel 20 ausgebildet, welche eine Schaufelaufnahme 22 und eine damit zusammenwirkende, schwenkbare Schaufelklappe 24 aufweist. Zum Aufnehmen einer Nutzlast L mit der Masse m_L durch das Ladewerkzeug 16 wird die Schaufelaufnahme 22 an einen Nutzlaststock St_1 (z.B. mit Silage bzw. Tierfutter gefüllt) herangeführt. Sobald eine aufnehmbare Masse m_L als mit einer vorgegebenen Ziel-Masse m_ziel hinreichend genau übereinstimmend detektiert wird, wird ein Schwenken bzw. Herunterklappen der Schaufelklappe 24 in einer Schließrichtung 26 ausgelöst und die Masse m_L tatsächlich aufgenommen. Dies kann z.B. automatisch mittels der Steuereinheit 18 oder individuell mittels des Nutzers bzw. Führers der Arbeitsmaschine 10 erfolgen. Bei diesem Ladevorgang trennt die Schaufelklappe 24 die aufzunehmende Nutzlast L vom Rest des Nutzlaststockes St_1 in akkurater Weise, so dass letzterer nicht unnötig beeinträchtigt wird. Gleichzeitig ist die Masse m_L der aufgenommenen Nutzlast L mit hinreichender Genauigkeit ermittelt worden, so dass nach diesem Ladevorgang auch keine anteilige Restmasse der Nutzlast L wieder an den Nutzlaststock St_1 zurückgeschüttet werden muss. Hierdurch werden insbesondere im Falle von Tierfutter etwaige Qualitätsminderungen des Nutzlaststockes St_1 vermieden.

Entlang einer Höhenrichtung h weist der Nutzlaststock St_1 aufgrund der Materialeigenschaften der Nutzlast L (z.B. bei Silage, Tierfutter) oftmals einen Dichtegradienten auf. Beispielsweise ist in einem höhenmäßig unteren Bodenbereich eine spezifische Materialdichte D_u größer als die Dichte D_o in einem höhenmäßig oberen Spitzenbereich. Höhenmäßig dazwischen können weitere unterschiedliche Dichtewerte existieren, z.B. eine Dichte D_m, wobei gilt D_u > D_m > D_o. In einem Kalibriervorgang vor dem eigentlichen Arbeitsbetrieb des Ladewerkzeugs 16 wird mindestens eine Materialdichte D, beispielsweise die beiden Dichten D_u und D_o ermittelt. Daraus können Kennlinien K, also K_u und K_o generiert und für den späteren Arbeitsbetrieb bereitgestellt werden. Mit dem Kalibriervorgang können entlang der Höhenrichtung beliebig viele weitere Dichten D oder Kalibrierdaten bzw. Kennlinien K direkt oder durch Interpolation generiert werden, beispielsweise die Dichte D_m bzw. die Kennlinie K_m.

Die vorgenannte Materialdichte D als Kalibrierdaten ist für eine Ermittlung der betrachteten Masse m_L der Nutzlast L besonders geeignet, da hierdurch lediglich ein Volumen V_L dieser Nutzlast L erfasst werden muss. Die Masse m_L kann dann einfach in Abhängigkeit von dem erfassten Volumen V_L und den zugeordneten Kalibrierdaten ermittelt werden.

Während des Arbeitsbetriebs wird die jeweilige Höhenposition Pos_h des Ladewerkzeugs 16 erfasst, um die zutreffende Materialdichte D bzw. zutreffende Kennlinie K zu bestimmen. Hierdurch kann die jeweils betrachtete Masse m_L innerhalb eines Nutzlaststockes mit Dichtegradienten besonders genau ermittelt werden.

Die Steuerung des Ladewerkzeugs 16 während des Arbeitsbetriebs erfolgt mittels der bereits erwähnten Steuereinheit 18. Letztere bildet Steuermittel oder ist Bestandteil von Steuermitteln, welche gemeinsam mit Sensormitteln und ggf. weiteren Baueinheiten ein System 28 zur Durchführung des Steuerungsverfahrens bilden.

Ein solches System 28 ist beispielhaft und schematisch in Fig. 2 dargestellt. In weiteren Ausführungsformen kann das System 28 durch weitere, hier nicht dargestellte Bauteile ergänzt sein.

Eine an der Arbeitsmaschine 10 und/oder der Hubvorrichtung 12 angeordnete Positionssensorik 30 erfasst die Höhenposition Pos_h des Ladewerkzeugs 16. Sensormittel 32 (z.B. zwei Kameras oder zwei Abstandssensoren) erfassen das Volumen V_L der zur beabsichtigten Aufnahme betrachteten Nutzlast L. Mittels der abhängig von der Höhenposition Pos_h zutreffenden Kennlinie K wird die Masse m_L der betrachteten Nutzlast ermittelt. Die jeweils ermittelte Masse m_L wird mit der Ziel-Masse m_ziel verglichen. Dieser Vergleich wird im Rahmen eines Algorithmus solange wiederholt, bis das Vergleichsergebnis eine per mathematischer Definition, insbesondere durch Berücksichtigung einer definierten Toleranzmasse, hinreichend genaue Übereinstimmung zwischen der ermittelten Masse m_L und der vorbestimmten Ziel-Masse m_ziel ergibt. Diese Masse m_L wird dann von dem Ladewerkzeug 16 im Rahmen dieses Ladevorganges aufgenommen. Der Arbeitsbetrieb kann auch weiter unterstützt werden, indem die Steuereinheit 18 einen Antriebsstrang 34 der Arbeitsmaschine 10 unterbricht, sobald das vorgenannte Vergleichsergebnis ergibt, dass die Ziel-Masse m_ziel hinreichend genau erreicht ist. Dem Nutzer oder Fahrer wird hierdurch signalisiert, dass in dieser erreichten Position des Ladewerkzeugs 16 die Nutzlast L aufgenommen werden kann.

Während seines Arbeitsbetriebs kann das Ladewerkzeug 16 nacheinander an unterschiedliche Nutzlaststöcke (z.B. Nutzlaststöcke St_1, St_2 und St_3) herangeführt werden, um unterschiedliche Nutzlasten L aufzunehmen. Dabei kann auch die Einhaltung einer bestimmten Reihenfolge wichtig sein, beispielsweise um aus unterschiedlichen Silage-Nutzlasten eine Mischung als Tierfutter möglichst optimal zusammenzustellen. Das Heranführen der Arbeitsmaschine 10 an unterschiedliche Nutzlaststöcke in einer spezifischen Reihenfolge kann durch ein Positionserfassungssystem 36 (z.B. GPS) der Arbeitsmaschine 10 unterstützt werden.

## Patentansprüche

1. Verfahren zur Steuerung eines an einer Hubvorrichtung (12) einer Arbeitsmaschine (10) angeordneten Ladewerkzeugs (16) in Gestalt einer Beißschaufel (20), welche eine Schaufelaufnahme (22) und eine damit zusammenwirkende schwenkbare Schaufelklappe (24) aufweist, wobei das Ladewerkzeug (16) während seines Arbeitsbetriebs eine Nutzlast (L) von einem Nutzlaststock (St_1 St_2, St_3) aufnimmt und wobei während des Arbeitsbetriebs die Masse (m_L) der Nutzlast (L) ermittelt wird, wobei
- Kalibrierdaten (K) bereitgestellt werden, welche ein Verhältnis von einem Volumen (V_L) der Nutzlast (L) zu einer Masse (m_L) der Nutzlast (L) repräsentieren,
- während des Arbeitsbetriebs des Ladewerkzeugs (16) ein Volumen (V_L) der Nutzlast (L) vor ihrer Aufnahme durch das Ladewerkzeug (16) erfasst wird, und
- die Masse (m_L) der Nutzlast (L) in Abhängigkeit von dem erfassten Volumen (V_L) und den Kalibrierdaten (K) ermittelt wird,
wobei zum Aufnehmen der Nutzlast (L) mit der ermittelten Masse (m_L) durch das Ladewerkzeug (16) die Schaufelaufnahme (22) an den Nutzlaststock (St_1) herangeführt wird, **dadurch gekennzeichnet, dass** ein Schwenken der Schaufelklappe (24) in einer Schließrichtung (26) ausgelöst und die ermittelte Masse (m_L) tatsächlich aufgenommen wird, sobald aufgrund eines Vergleichs die aufnehmbare Masse (m_L) als mit der vorgegebenen Ziel-Masse (m_ziel) übereinstimmend detektiert wird.

2. Verfahren nach Anspruch 1, **dadurch gekennzeichnet, dass** in Abhängigkeit von dem Vergleichsergebnis ein Fahrantrieb (34) der Arbeitsmaschine (10) gestoppt oder unterbrochen wird.

3. Verfahren nach Anspruch 1 oder 2, **dadurch gekennzeichnet, dass** für unterschiedliche Höhenpositionen (Pos_h) des Ladewerkzeugs (16) jeweils Kalibrierdaten (K) bereitgestellt werden.

4. Verfahren nach einem der vorhergehenden Ansprüche, **dadurch gekennzeichnet, dass** das Ladewerkzeug (16) während seines Arbeitsbetriebs nacheinander an unterschiedliche Nutzlaststöcke (St_1 St_2, St_3) zur Aufnahme unterschiedlicher Nutzlasten (L) herangeführt wird.

5. Verfahren nach Anspruch 4, **dadurch gekennzeichnet, dass** die aufgenommenen unterschiedlichen Nutzlasten (L) Bestandteil einer Mischung, insbesondere einer Futtermischung, sind.

6. Verfahren nach Anspruch 4 oder 5, **dadurch gekennzeichnet, dass** das Ladewerkzeug (16) in einer vorbestimmten Reihenfolge an unterschiedliche Nutzlaststöcke (St_1 St_2, St_3) herangeführt wird.

7. System zur Steuerung eines an einer Hubvorrichtung (12) einer Arbeitsmaschine (10) angeordneten Ladewerkzeugs (16) in Gestalt einer Beißschaufel (20), welche eine Schaufelaufnahme (22) und eine damit zusammenwirkende schwenkbare Schaufelklappe (24) aufweist, wobei das Ladewerkzeug (16) während seines Arbeitsbetriebs eine Nutzlast (L) von einem Nutzlaststock (St_1 St_2, St_3) aufnimmt und wobei während des Arbeitsbetriebs die Masse (m_L) der Nutzlast (L) ermittelt wird, wobei eine Steuereinheit (18) Kalibrierdaten (K) bereitstellt, welche ein Verhältnis von einem mittels Sensormitteln (32) erfassten Volumen (V_L) der Nutzlast (L) zu einer Masse (m_L) der Nutzlast (L) repräsentieren, während des Arbeitsbetriebs des Ladewerkzeugs (16) ein Volumen (V_L) der Nutzlast (L) vor ihrer Aufnahme durch das Ladewerkzeug (16) erfasst, und die Masse (m_L) der Nutzlast (L) in Abhängigkeit von dem erfassten Volumen (V_L) und den Kalibrierdaten (K) ermittelt, wobei zum Aufnehmen der Nutzlast (L) mit der ermittelten Masse (m_L) durch das Ladewerkzeug (16) die Schaufelaufnahme (22) an den Nutzlaststock (St_1) herangeführt wird, **dadurch gekennzeichnet, dass** ein Schwenken der Schaufelklappe (24) in einer Schließrichtung (26) ausgelöst und die ermittelte Masse (m_L) tatsächlich aufgenommen wird, sobald die Steuereinheit (18) aufgrund eines Vergleichs die aufnehmbare Masse (m_L) als mit der vorgegebenen Ziel-Masse (m_ziel) übereinstimmend detektiert.

## Claims

1. Method for controlling a loading tool (16) arranged on a lifting device (12) of a machine (10), said loading tool (16) being in the form of a grapple bucket (20) which has a bucket receptacle (22) and a pivotable bucket flap (24) cooperating therewith, wherein the loading tool (16), during its operation, receives a payload (L) from a payload stock (St_1, St_2, St_3) and wherein, during operation, the mass (m_L) of the payload (L) is determined, wherein
- calibration data (K) are provided which represent a ratio of a volume (V_L) of the payload (L) to a mass (m_L) of the payload (L),
- during operation of the loading tool (16), a volume (V_L) of the payload (L) is sensed before it is received by the loading tool (16), and
- the mass (m_L) of the payload (L) is determined depending on the sensed volume (V_L) and the calibration data (K),
wherein, in order for the payload (L) with the determined mass (m L) to be received by the loading tool (16), the bucket receptacle (22) is guided to the payload stock (St_1), **characterized in that** pivoting of the bucket flap (24) in a closing direction (26) is initiated and the determined mass (m_L) is actually received as soon as, on the basis of a comparison, the receivable mass (m L) is detected as corresponding to the predefined target mass (m_target).

2. Method according to Claim 1, **characterized in that** propulsion (34) of the machine (10) is stopped or interrupted depending on the result of the comparison.

3. Method according to Claim 1 or 2, **characterized in that** respective calibration data (K) are provided for different height positions (Pos_h) of the loading tool (16).

4. Method according to one of the preceding claims, **characterized in that** the loading tool (16) is guided consecutively, during its operation, to different payload stocks (St_1, St_2, St_3) in order to receive different payloads (L).

5. Method according to Claim 4, **characterized in that** the different payloads (L) received are constituents of a mixture, in particular a feed mixture.

6. Method according to Claim 4 or 5, **characterized in that** the loading tool (16) is guided to different payload stocks (St_1, St_2, St_3) in a predetermined order.

7. System for controlling a loading tool (16) arranged on a lifting device (12) of a machine (10), said loading tool (16) being in the form of a grapple bucket (20) which has a bucket receptacle (22) and a pivotable bucket flap (24) cooperating therewith, wherein the loading tool (16), during its operation, receives a payload (L) from a payload stock (St_1, St_2, St_3) and wherein, during operation, the mass (m_L) of the payload (L) is determined, wherein a control unit (18) provides calibration data (K) which represent a ratio of a volume (V_L), sensed by means of sensor means (32), of the payload (L) to a mass (m_L) of the payload (L), during operation of the loading tool (16), a volume (V_L) of the payload (L) is sensed before it is received by the loading tool (16), and the mass (m_L) of the payload (L) is determined depending on the sensed volume (V_L) and the calibration data (K), wherein, in order for the payload (L) with the determined mass (m_L) to be received by the loading tool (16), the bucket receptacle (22) is guided to the payload stock (St_1), **characterized in that** pivoting of the bucket flap (24) in a closing direction (26) is initiated and the determined mass (m_L) is actually received as soon as, on the basis of a comparison, the control unit (18) detects the receivable mass (m_L) as corresponding to the predefined target mass (m_target).

## Revendications

1. Procédé de commande d'un outil de chargement (16} disposé sur un dispositif de levage (12) d'une machine de travail (10) et se présentant sous la forme d'une pelle mordante (20) qui comporte un réceptacle de pelle (22) et un volet de pelle pivotant (24) coopérant avec celui-ci, l'outil de chargement (16) recevant une charge utile (L) d'un amas de charge utile (St_1, St_2, St_3) pendant son opération de travail, et la masse (m_L) de la charge utile (L) étant déterminée pendant l'opération de travail,
- des données d'étalonnage (K) étant fournies qui représentent un rapport d'un volume (V L) de la charge utile (L) à une masse (m_L) de la charge utile (L),
- lors de l'opération de travail de l'outil de chargement (16), un volume (V_L) de la charge utile (L) étant détecté avant que celle-ci ne soit ramassée par l'outil de chargement (16), et
- la masse (m_L) de la charge utile (L) étant déterminée en fonction du volume détecté (V_L) et des données d'étalonnage (K),
pour ramasser la charge utile (L) avec la masse déterminée (m_L) à l'aide de l'outil de chargement (16), le réceptacle de pelle (22) étant approché de l'amas de charge utile (St_1), **caractérisé en ce que** le pivotement du volet de pelle (24) est déclenché dans un sens de fermeture (26) et la masse déterminée (m_L) est réellement ramassée dès que, sur la base d'une comparaison, la masse (m_L) qui peut être ramassée est détectée comme coïncidant avec la masse cible spécifiée (m_ziel).

2. Procédé selon la revendication 1, **caractérisé en ce qu'**un entraînement de roulement (34) de la machine de travail (10) est arrêté ou interrompu en fonction du résultat de la comparaison.

3. Procédé selon la revendication 1 ou 2, **caractérisé en ce que** des données d'étalonnage (K) sont fournies pour différentes positions en hauteur (Pos_h) de l'outil de chargement (16).

4. Procédé selon l'une des revendications précédentes, **caractérisé en ce que**, au cours de son opération de travail, l'outil de chargement (16) est approché de différents amas de charge utile (St_1, St_2, St_3) afin de ramasser différentes charges utiles (L) les unes après les autres.

5. Procédé selon la revendication 4, **caractérisé en ce que** les différentes charges utiles (L) qui ont été ramassées font partie d'un mélange, notamment d'un mélange d'alimentation animale.

6. Procédé selon la revendication 4 ou 5, **caractérisé en ce que** l'outil de chargement (16) est approché de différents amas de charge utile (St_1, St_2, St 3) dans un ordre prédéterminé.

7. Système de commande d'un outil de chargement (16) disposé sur un dispositif de levage (12) d'une machine de travail (10) et se présentant sous la forme d'une pelle mordante (20) qui comporte un réceptacle de pelle (22) et un volet de pelle pivotant (24) coopérant avec celui-ci, l'outil de chargement (16) ramassant une charge utile (L) d'un amas de charge utile (St_1, St_2, St_3) pendant son opération de travail, et la masse (m_L) de la charge utile (L) étant déterminée pendant l'opération de travail, une unité de commande (18) fournissant des données d'étalonnage (K), qui représentent un rapport d'un volume (V_L) de la charge utile (L), détecté à l'aide de moyens de détection (32), à une masse (m_L) de la charge utile (L) pendant l'opération de travail de l'outil de chargement (16), détectant un volume (V_L) de la charge utile (L) avant que celle-ci ne soit ramassée par l'outil de chargement (16), et déterminant la masse (m_L) de la charge utile (L) en fonction du volume détecté (V_L) et des données d'étalonnage (K), pour ramasser la charge utile (L) avec la masse déterminée (m_L) à l'aide de l'outil de chargement (16), le réceptacle de pelle (22) étant approché de l'amas de charge utile (St_1), **caractérisé en ce que** le pivotement du volet de pelle (24) dans un sens de fermeture (26) est déclenché et la masse déterminée (m_L) est réellement ramassée dès que, sur la base d'une comparaison, l'unité de commande (18) détecte la masse (m_L), qui peut être ramassée, comme coïncidant avec la masse cible spécifiée (m_ziel).
